# EUROPEAN PATENT APPLICATION

(11) **EP 4 675 120 A1**
(43) Date of publication of application: **07.01.2026**
(21) Application number: 24898946.9
(22) Date of filing: 20.06.2024
(51) Int. Cl.: F16D 1/108, F16D 1/02, B66D 1/14, B23F 5/20, F16H 48/20

(54) **SPLINE, SPLINE ASSEMBLY, SPINDLE-TOOL HOLDER MECHANISM, ROTATING WHEEL MECHANISM, AND TRANSMISSION MECHANISM**

(30) Priority: 08.05.2024 CN 202410565790
(71) Applicant: Jiang, Hong, Beijing 100044 (CN)
(72) Inventor: WANG, Xiaochun, Beijing 100044 (CN)
(74) Representative: Huang, Liwei
(86) International application number: PCT/CN2024/100470
(87) International publication number: WO 2025/231970

(57) **Abstract**

The present disclosure provides a spline, a spline assembly, a spindle tool holder mechanism, a rotating wheel mechanism, and a transmission mechanism. A plurality of teeth evenly distributed in a circumferential direction of the spline are formed at a transmission end of the spline. A tooth surface of each of the teeth includes a tooth crest conical surface, inclined planes, and tooth root conical surfaces, and the inclined planes are inclined relative to an axis of the spline. The tooth crest conical surface, the inclined plane, and the tooth root conical surface are sequentially and tangentially connected. The tooth surfaces of the plurality of teeth are sequentially connected to form an annular curved surface, which is a first-order continuous periodic wavy surface. The tooth crest conical surface, the inclined planes, and the tooth root conical surfaces are all working tooth surfaces and are all developable surfaces. Addendums of the plurality of teeth are the same, and dedendums of the plurality of teeth are the same. When two splines are connected, gap-free full tooth surface fitting can be implemented, radial, axial, and circumferential positioning is accurate, and the connection strength and rigidity are high. The spline is suitable for high-rigidity connection between high-speed rotating members. The tooth surfaces are in smooth transition, without stress concentration and the risk of fatigue fracture.

## Description

### TECHNICAL FIELD

The present disclosure relates to an end face connecting mechanism of a mechanical part, and in particular, to a spline, a spline assembly, a spindle tool holder mechanism, a rotating wheel mechanism, and a transmission mechanism.

### BACKGROUND

In mechanical manufacturing, shaft parts, disc-shaped parts, and sleeve parts often need to be connected to each other in pairs. Flat keys, splines, semicircular keys, tangential keys, elastic expansion sleeves, interference fit, end-face keys, hirth couplings, and curved-tooth end gear discs are adopted in common connection methods. However, high strength, high reliability, low cost, ease of disassembly and assembly, and applicability to connection between rotating parts of a high-speed machine cannot be balanced in these connection methods. A patent No. 202010002807.4 discloses a spline with a wavy end face. A plurality of teeth are formed on the end face of the spline, and each of the teeth includes a tooth crest, a tooth root, and working tooth surfaces. The plurality of teeth are formed on the end face in an order of the tooth crest, the working tooth surface, the tooth root, the working tooth surface, and the tooth crest. The end face of one spline mates with the end face of another spline, enabling the two splines to be rigidly connected. However, in each tooth, only inclined planes are the working tooth surfaces, which can bear a limited working pressure. When two splines are connected, a gap is formed between the two mating end faces, causing dust to enter the gap easily, and coolant to leak through the gap, thereby resulting in a reduced mating area of the two mating end faces and a deteriorated connection reliability.

### SUMMARY

In view of the above, the present disclosure provides a spline, a spline assembly, a spindle tool holder mechanism, a rotating wheel mechanism, and a transmission mechanism to solve the problems that in the existing spline, only inclined planes are working tooth surfaces and can bear a limited working pressure, and when two splines are connected, dust is easy to enter a gap between two mating end faces, resulting in a reduced mating area and a deteriorated connection reliability.

The present disclosure provides a spline, where a plurality of teeth evenly distributed in a circumferential direction of the spline are formed at a transmission end of the spline;
tooth surfaces of the plurality of teeth are sequentially connected to form an annular curved surface, which is a first-order continuous periodic wavy surface;
the tooth surface of each of the teeth includes a tooth crest conical surface, tooth root conical surfaces, and inclined planes tangentially connected between the tooth crest conical surface and the tooth root conical surfaces, and the inclined planes are arranged obliquely relative to an axis of the spline;
the tooth crest conical surface, the inclined planes, and the tooth root conical surfaces are all working tooth surfaces and are all developable surfaces; and
addendums of the plurality of teeth are the same, and dedendums of the plurality of teeth are the same; and the addendum is h1, the dedendum is h2, and h1 and h2 meet: 0 ≤ h2 - h1 ≤ 2 µm.

Further optionally, the tooth crest conical surface is symmetrical with respect to a tooth crest radial surface, and the tooth root conical surfaces are symmetrical with respect to a tooth root radial surface,
where the tooth crest conical surface defines a tooth crest, and the tooth crest radial surface is a radial central surface of the tooth crest passing through the axis of the spline; and each of the tooth root conical surfaces defines a tooth root, and the tooth root radial surface is a radial central surface of the tooth root passing through the axis of the spline.

Further optionally, an axis of the tooth crest conical surface is inclined relative to the axis of the spline, and a generatrix at the highest position of the tooth crest conical surface is perpendicular to the axis of the spline; and/or
an axis of each of the tooth root conical surfaces is inclined relative to the axis of the spline, and a generatrix at the lowest position of the tooth root conical surface is perpendicular to the axis of the spline.

Further optionally, two adjacent teeth are symmetrical with respect to a radial central surface of a tooth space formed between the two adjacent teeth.

Further optionally, the tooth crest conical surface and the tooth root conical surfaces are all circular conical surfaces, or
the tooth crest conical surface and the tooth root conical surfaces are all elliptical conical surfaces, and a major axis of each of the elliptical conical surfaces is perpendicular to the axis of the spline.

Further optionally, the annular curved surface may be formed by a cylindrical surface or a conical surface through enveloping.

Further optionally, the annular curved surface is designed to be formed through machining by a side edge of a milling cutter.

Further optionally, an included angle between a projection of a tangent line of the tooth crest conical surface and the inclined plane on the tooth crest radial surface and a tooth crest tangent plane is θ; and an included angle between a projection of a tangent line of the tooth root conical surface and the inclined plane on the tooth root radial surface and a tooth root tangent plane is δ; and
θ and δ meet: 3° ≤ θ ≤ 25°, and 3° ≤ δ ≤ 25°,
where the tooth crest tangent plane is perpendicular to the axis of the spline and tangent to the tooth crest conical surface, and the tooth root tangent plane is perpendicular to the axis of the spline and tangent to the tooth root conical surface.

Further optionally, an included angle between the inclined plane and the axis of the spline is γ, and γ meets: 5° ≤ γ ≤ 45°.

Further optionally, an included angle between the axis of the tooth crest conical surface and the generatrix at the highest position is α, and an included angle between the axis of the tooth root conical surface and the generatrix at the lowest position is β; and
α and β meet: 5° ≤ α ≤ 30°, and 5° ≤ β ≤30°.

Further optionally, α and β further meet: 0° ≤ α - β ≤ 10⁻⁸°.

The present disclosure further provides a spline assembly, including a first spline and a second spline, where each of the first spline and the second spline is the spline according to any one of the above-mentioned implementations; and tooth surfaces of the first spline mate with tooth surfaces of the second spline, making the first spline and the second spline connected.

The present disclosure further provides a spline assembly, including a first spline and a second spline, where each of the first spline and the second spline is the spline according to any one of the above-mentioned implementations; and tooth surfaces of the first spline mate with tooth surfaces of the second spline, making the first spline the second spline connected;
when the first spline and the second spline are connected, the tooth surfaces of the first spline mate with the tooth surfaces of the second spline in two states. Two mating states include a full tooth surface fitting state and a partial tooth surface fitting state, the full tooth surface fitting state refers to a state where the entire tooth surfaces of the first spline and the entire tooth surfaces of the second spline are fully fitted, and the partial tooth surface fitting state refers to a state where all inclined planes of the first spline and all inclined planes of the second spline are only fitted; and
when α = β, the tooth surfaces of the first spline and the tooth surfaces of the second spline are in the full tooth surface fitting state, or
when α > β, and the first spline and the second spline are not subjected to a pretightening force, the tooth surfaces of the first spline and the tooth surfaces of the second spline are in the partial tooth surface fitting state, or
when α > β, and the first spline and the second spline are subjected to a pretightening force, the tooth surfaces of the first spline and the tooth surfaces of the second spline are in the full tooth surface fitting state.

The present disclosure further provides a spindle tool holder mechanism for a machine tool. The spindle tool holder mechanism includes a spindle, a tool holder, and the spline assembly according to any one of the above-mentioned implementations, where a first spline is formed at one end of the spindle, and a second spline is formed at one end of the tool holder; and the first spline mates with the second spline, enabling the spindle and the tool holder to be connected.

The present disclosure further provides a rotating wheel mechanism, including a plurality of turbines sequentially arranged and the spline assembly according to any one of the above-mentioned implementations, where a first spline is formed at one axial end of each of the turbines, and a second spline is formed at the other axial end of the turbine; and two adjacent turbines can be connected integrally via the first spline and the second spline, or
the rotating wheel mechanism includes a plurality of compressor impellers sequentially arranged and the spline assembly according to any one of the above-mentioned implementations, where a first spline is formed at one axial end of each of the compressor impellers, and a second spline is formed at the other axial end of the compressor impeller; and two adjacent compressor impellers can be connected integrally via the first spline and the second spline, or
the rotating wheel mechanism includes a turbine and a compressor impeller that are adjacently arranged and the spline assembly according to any one of the above-mentioned implementations, where a first spline is formed at one axial end of the turbine, and a second spline is formed at one axial end of the compressor impeller; and the first spline mates with the second spline, enabling the turbine and the compressor impeller to be integrated.

The present disclosure further provides a transmission mechanism, including a disc-shaped member, a rotating shaft, and the spline assembly according to any one of the above-mentioned implementations, where a first spline is formed at one end of the disc-shaped member, a shaft shoulder is formed at the rotating shaft, and a second spline is formed at one end of the shaft shoulder; and the first spline mates with the second spline, enabling the disc-shaped member and the rotating shaft to be in transmission connection.

The present disclosure further provides a transmission mechanism for a winch. The transmission mechanism includes a drum, a driving gear, and the spline assembly according to any one of the above-mentioned implementations, where a first spline is formed at one end of the drum, and a second spline is formed at one end of the driving gear; and the first spline mates with the second spline, enabling the drum and the driving gear to be in transmission connection.

Compared with the prior art, the present disclosure mainly has the following beneficial effects.

The tooth crest conical surface, the inclined planes, and the tooth root conical surfaces are all developable surfaces, offering excellent machinability. When machining the tooth surface, the developable surfaces fit with the side edge of the cutter, so that the cutter can continuously feed and machine at a time, thereby improving the machining efficiency and reducing the machining costs.

When two splines with the same structure are connected, the tooth surfaces of the two splines can be in full tooth surface fitting unconditionally or under the action of an axial pretightening force. The full tooth surface fitting can prevent dust from entering between the two mating tooth surfaces, and can also prevent coolant from leaking through the gap between the two mating tooth surfaces when the spindle and the tool holder are connected via the two splines.

The tooth crest conical surface, the inclined planes, and the tooth root conical surfaces are all working tooth surfaces. The full tooth surface fitting enables the working pressure of the teeth to be distributed to the tooth crest conical surface, the inclined planes, and the tooth root conical surfaces, thereby increasing the pressure bearing capacity of the inclined planes. The full tooth surface fitting can achieve accurate radial, axial, and circumferential positioning, with high connection strength, high connection rigidity, and high reliability. When two rotating members are connected via the splines and rotate at a high speed, an axial pretightening force between the two splines will not be lost, and a rotational torque can be accurately transmitted, which is suitable for high-rigidity connection between high-speed rotating members.

In each tooth, the tooth crest conical surface, the inclined planes, and the tooth root conical surfaces are connected sequentially and tangentially in smooth transition, so that no stress concentration occurs during tooth operation. The pretightening force on the tooth surface is in continuous and smooth transition, without the risk of fatigue fracture, thereby prolonging the service life of the tooth.

### BRIEF DESCRIPTION OF THE DRAWINGS

To more clearly illustrate technical solutions in the implementations of the present disclosure or in the prior art, the accompanying drawings required in the description of the implementations or the prior art will be described below in brief. Apparently, the accompanying drawings described below are only exemplary. A person of ordinary skill in the art may still derive other implementation drawings from these accompanying drawings without making creative efforts.

The structure, scale, size, and other details depicted in this specification are merely used to facilitate the understanding and reading of the contents disclosed therein by those skilled in the art, are not constructed as limiting conditions for implementing the present disclosure, and therefore, these representations do not have a substantial technical significance. Any modifications to the structure, changes in the proportional relationship or adjustments to the size, without affecting the efficacy and the objectives that can be achieved in the present disclosure, should still fall within the scope of the technical content disclosed in the present disclosure.
FIG. 1a, FIG. 1b, FIG. 1c, and FIG. 1d are schematic structural diagrams of a shaft side of spline according to an embodiment of the present disclosure;
FIG. 1e is an enlarged view of a tooth in FIG. 1b;
FIG. 1f is a schematic structural diagram of a spline, from a front view, according to an embodiment of the present disclosure;
FIG. 1g is a schematic structural diagram of a partial tooth profile of a spline according to an embodiment of the present disclosure;
FIG. 2a is a schematic structural diagram of a first spline and a second spline that are not connected according to an embodiment of the present disclosure;
FIG. 2b is a schematic structural diagram of a first spline and a second spline that are connected according to an embodiment of the present disclosure;
FIG. 3 is a schematic structural diagram of a spindle and a tool holder when they are assembled according to an embodiment of the present disclosure;
FIG. 4a is a schematic structural diagram of a spline according to another embodiment of the present disclosure;
FIG. 4b is a schematic structural diagram of a transmission mechanism according to an embodiment of the present disclosure when a disc-shaped member and a rotating shaft are exploded; and
FIG. 4c is a schematic structural diagram of a transmission mechanism, from a sectional view, according to an embodiment of the present disclosure when a disc-shaped member and a rotating shaft are assembled.

In the figures:
1 - spline; 11 - tooth; 111 - tooth crest conical surface; 112 - inclined plane; 1121 - first inclined plane; 1122 - second inclined plane; 113 - tooth root conical surface; 114 - generatrix at the highest position; 115 - generatrix at the lowest position; 116 - line where the generatrix at the highest position is located; 117 - line where the generatrix at the lowest position is located; 12 - tooth space; 131 - tooth crest base conical surface; 132 - tooth root base conical surface; 133 - tooth crest directrix; 134 - tooth root directrix; 141 - spline axis; 142 - tooth crest axis; 143 - tooth root axis; 145 - tooth crest tangent line; 146 - tooth root tangent line; 147 - line where a projection of the tooth crest tangent is located; 148 - line where a projection of the tooth root tangent is located; 151 - tooth reference surface; 152 - tooth crest tangent plane; 153 - tooth root tangent plane; 154 - tooth crest radial surface; 155 - tooth root radial surface; 156 - cone top cylindrical surface; 161 - first spline; 162 - second spline; 17 - inner cylindrical surface; 18 - involute; 181 - first segment; 182 - second segment; 183 - third segment; 184 - fourth segment; 191 - first endpoint; 192 - second endpoint; 193 - third endpoint;
2 - spindle box; 3 - tool holder;
41 - disc-shaped member; 411 - shaft hole; 42 - rotating shaft; 421 - shaft shoulder; 43 - conical expansion sleeve; 44 - nut.

### DETAILED DESCRIPTION

The implementations of the present disclosure are described below through specific embodiments, and a person skilled in the art can easily understand other advantages and effects of the present disclosure from the contents disclosed in this specification. Apparently, the described embodiments are part of the embodiments of the present disclosure rather than all of the embodiments. All other embodiments obtained by ordinary skills in the art based on the embodiments of the present disclosure without making creative efforts shall fall within the protection scope of the present disclosure.

Terms used in the embodiments of the present disclosure are merely used to describe the specific embodiments, and are not intended to limit the present disclosure. The singular forms "a", "the" and "this" used in the embodiments of the present disclosure and the appended claims are also intended to include plural forms, unless the context clearly indicates other meanings. "A plurality of" generally includes at least two, but does not exclude a case of including at least one.

It should be understood that, the term "and/or" used herein merely describes associated relationships between associated objects, and indicating that three kinds of relationships may exist. For example, "A and/or B" may indicate that A exists alone, A and B coexist, or B exists alone. In addition, the character "/" herein generally indicates an "or" relationship between preceding and succeeding associated objects.

It should also be noted that the terms "including", "comprising", or any other variants thereof are intended to cover a non-exclusive inclusion, so that a product or a system that includes a series of elements not only includes those elements but also includes other elements which are not expressly listed, or further includes elements inherent to such a product or system. Without additional constraints, the element limited by the statement "including a ..." does not exclude the existence of other identical elements in the product or the system that includes the element.

In the existing end face spline, only inclined planes of each tooth are the working tooth surfaces, which can bear a limited working pressure. When two splines are connected, a gap is formed between the two mating end faces, causing dust to enter the gap easily, and a pretightening pressure on the tooth surfaces to be suddenly interrupted, thereby resulting in reducing the mating area of the two mating end faces and deteriorating the connection reliability.

The present disclosure creatively provides a spline. A plurality of teeth are formed at a transmission end of the spline, and the plurality of teeth are evenly distributed in a circumferential direction of the spline. Tooth surfaces of the plurality of teeth are sequentially connected to form an annular curved surface, which is a first-order continuous periodic wavy surface. The tooth surface of each of the teeth includes a tooth crest conical surface, tooth root conical surfaces, and inclined planes tangentially connected between the tooth crest conical surface and the tooth root conical surfaces, and the inclined planes are inclined relative to an axis of the spline.

When two splines with the same structure are connected, the tooth surfaces of the two splines can be in full tooth surface fitting unconditionally or under the action of an axial pretightening force. The full tooth surface fitting can prevent dust from entering between the two mating tooth surfaces. The tooth crest conical surface, the inclined planes, and the tooth root conical surfaces of each of the teeth all participate in operations, and the pretightening force on the tooth surfaces is in continuous and smooth transition, so that the pressure bearing capacity of the inclined planes is improved. The tooth crest conical surface, the inclined planes, and the tooth root conical surfaces are all developable surfaces, offering excellent machinability, thereby improving the machining efficiency, reducing the machining costs, and solving the problems of limited pressure bearing capacity of the inclined planes in the existing spline, and small mating area between the two mating end faces and poor connection reliability when the two splines are connected.

### Embodiment 1

### <Spline>

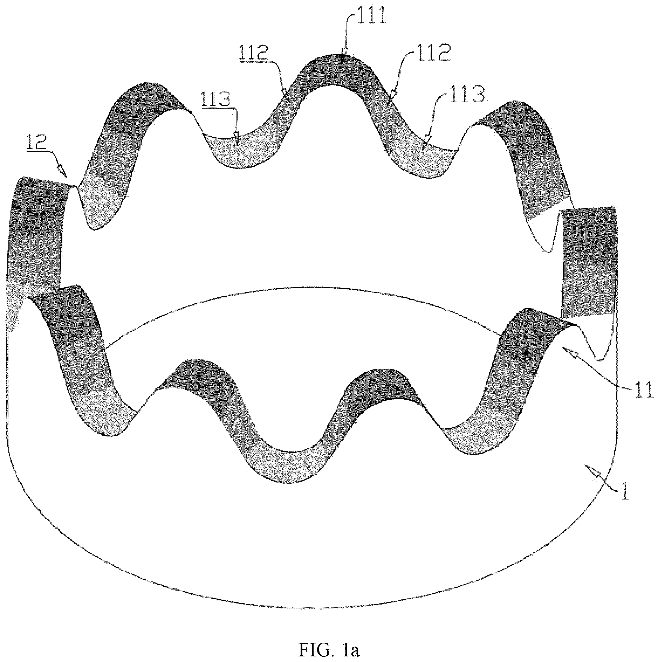

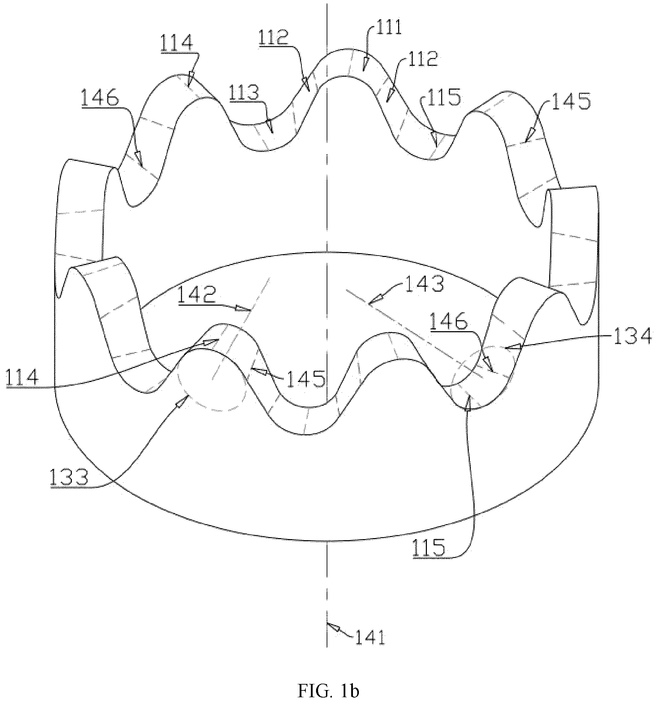

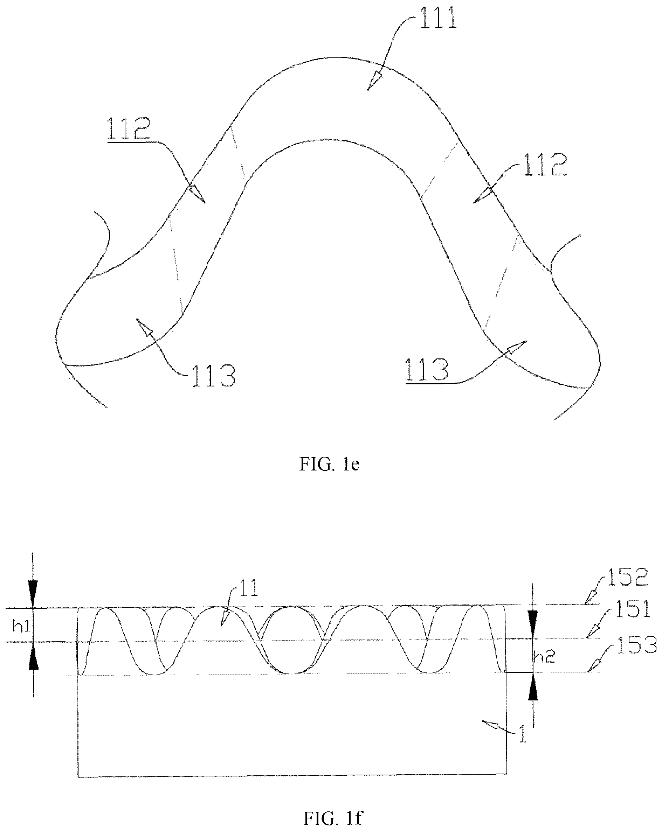

As shown in FIG. 1a to FIG. 1g, the embodiment provides a spline. A plurality of teeth 11 are formed at a transmission end of the spline 1, and the plurality of teeth 11 are evenly distributed in a circumferential direction of the spline 1.

Tooth surfaces of the plurality of teeth 11 are sequentially connected to form an annular curved surface. Preferably, the annular curved surface is a first-order continuous periodic wavy surface.

Addendums of the plurality of teeth 11 are the same, and dedendums of the plurality of teeth 11 are the same. The addendum is h1, the dedendum is h2, and h1 and h2 meet: 0 ≤ h2 - h1 ≤ 2 µm.

The tooth surface of each of the teeth 11 includes a tooth crest conical surface 111, tooth root conical surfaces 113, and inclined planes 112 tangentially connected between the tooth crest conical surface 111 and the tooth root conical surfaces 113, and the inclined planes 112 are inclined relative to an axis of the spline 1 (referred to as spline axis 141 for short). In each of the teeth 11, the inclined planes 112 and the tooth root conical surfaces 113 are arranged on both sides of the tooth crest conical surface 111. In other words, one tooth root conical surface 113, one inclined plane 112, the tooth crest conical surface 111, the other inclined plane 112, and the other tooth root conical surface 113 are sequentially and tangentially connected in the circumferential direction of the spline 1, thereby forming the tooth surface of the tooth 11. The tooth crest conical surface 111 defines a tooth crest, and each of the tooth root conical surfaces 113 defines a tooth root. Preferably, in each of the teeth 11, the tooth crest conical surface 111, the inclined planes 112, and the tooth root conical surfaces 113 all form working tooth surfaces of the tooth surface and are developable surfaces. Preferably, the entire tooth surface of the spline 1 is also a developable surface.

Specifically, as shown in FIG. 1a to FIG. 1g, a tooth space 12 is formed between two adjacent teeth 11, and the tooth 11 of one spline 1 is engaged with the tooth space 12 of another spline 1, enabling the two splines 1 to be connected. It is assumed that a cylindrical surface is made with an average diameter of the spline 1 as a diameter and the spline axis 141 as an axis. A circle exists in the cylindrical surface. When the thickness of the corresponding tooth 11 on the circle is equal to the width of the tooth space 12, the circle becomes a pitch circle of the spline 1, and an intersection point between the pitch circle and the inclined plane 112 is a tooth surface midpoint. A plane perpendicular to the spline axis 141 is drawn through the tooth surface midpoint, and the plane is a tooth reference plane 151. An intersection line between the tooth reference plane 151 and the inclined plane 112 intersects the spline axis 141 at a point, which is an origin of the spline 1. A plane perpendicular to the spline axis 141 and tangent to the tooth crest conical surface 111 is drawn, and the plane is a tooth crest tangent plane 152. A distance between the tooth crest tangent plane 152 and the tooth reference plane 151 is an addendum. A plane perpendicular to the spline axis 141 and tangent to the tooth root conical surface 113 is drawn, and the plane is a tooth root tangent plane 153. A distance between the tooth root tangent plane 153 and the tooth reference plane 151 is a dedendum. Preferably, the addendum is h1, the dedendum is h2, and h1 and h2 meet: 0 ≤ h2 - h1 ≤ 2 µm. Due to 0 ≤ h2 - h1 ≤ 2 µm, the tooth surfaces of the two splines 1 can be in full tooth surface fitting well under the action of an axial pretightening force. Further preferably, the minimum gap between a tooth crest of one spline 1 and a tooth root of another spline 1 is 0.5 µm, and the maximum gap therebetween is 2 µm.

Through the above design, compared with the prior art, the present application has the following important technical effects.
(1) In each tooth 11, the tooth crest conical surface 111, the inclined plane 112, and the tooth root conical surface 113 are all developable surfaces sequentially in smooth transition, so that in the present application:
   ①The tooth surface has excellent machinability. During machining the tooth surface, the developable surfaces fit with a side edge of a cutter, so that the entire annular curved surface can be machined by one-time continuous feeding of the cutter. This achieves high forming quality, optimizes the machining process, improves the machining efficiency, and reduces the machining costs.
   ② When the tooth 11 operates, the tooth surface is evenly stressed, so that no stress concentration occurs,without a risk of fatigue fracture, thereby prolonging the service life of the tooth 11.
   ③The tooth surface has no sharp concave angle, avoiding an inevitable concave angle on a hirth coupling and a curved-tooth end gear disc as well as the problem of stress concentration at the tooth root caused by the concave angle.
   ④The tooth crest conical surface 111, the inclined planes 112, and the tooth root conical surfaces 113 are all formed by developable surfaces. When machining the tooth surfaces of the spline 1, the cutter is always in contact with an envelope surface along a determined straight generatrix, regardless of the cutter diameter. The machined tooth surfaces have certainty, enabling the tooth crest conical surface 111, the inclined planes 112, and the tooth root conical surfaces 113 to serve as the working tooth surfaces with higher working performance.

It should be noted that although the swing law of a milling cutter is defined in the prior art, since a contact line between the milling cutter and the envelope surface is a space curve, according to the same swing law, transition curved surfaces machined by milling cutters with different diameters are different. In other words, each transition curved surface inherently has uncertainty, and it is impossible to make the transition curved surface fitted with the transition curved surface of the matched spline. Furthermore, in the existing face spline mentioned in the background of the present application, two working tooth surfaces are connected through a transition curved surface. The transition curved surface does not participate in operations and is formed by swinging a cylindrical end mill from a position parallel to the working tooth surface on one side to a position parallel to the working tooth surface on the other side in a circumferential direction of the spline.
(2) Further, in the present application, the tooth crest conical surface 111, the inclined planes 112, and the tooth root conical surfaces 113 of each tooth 11 are designed to be developable surfaces and all form the working tooth surfaces. This can further achieve the following effects.
   ① When two splines 1 are connected, the working pressure on each tooth 1 can be distributed to the tooth crest conical surface 111, the inclined planes 112, and the tooth root conical surfaces 113, ensuring that a pretightening force on the tooth surface is in continuous and smooth transition, without stress peaks caused by stress interruption, thereby improving the pressure bearing capacity of the inclined planes 112, reducing the working pressure on the inclined planes 112, and prolonging the service lives of the inclined planes 112. As a result, high connection strength, connection stiffness, and reliability of the two splines 1 are achieved.
   ②The two splines 1 can transmit a rotational torque accurately and withstand a radial force and an overturning moment.
(3) Further, according to the present application, the addendums of the plurality of teeth 11 are designed to be the same, the dedendums of the plurality of teeth 11 are designed to be the same, and the dimensional relationship between the addendum h1 and the dedendum h2 is designed to meet 0 ≤ h2 - h1 ≤ 2 µm. Therefore, when two splines 1 are connected, and the addendum h1 of one spline 1 is equal to the dedendum h2 of the other spline 1, the tooth surfaces of the two splines 1 can be in full tooth surface fitting unconditionally. When the addendum h1 of one spline 1 is smaller than the dedendum h2 of the other spline 1, that is, 0 < h2 - h1 ≤ 2 µm, the tooth surfaces of the two splines 1 can be in full tooth surface fitting under the action of an axial pretightening force.

Specifically, when two splines 1 are connected, a first full tooth surface fitting state and a second full tooth surface fitting state exist between the two mating tooth surfaces. In the first full tooth surface fitting state, the fitting degree of the two mating tooth surfaces is lower than that of the two mating tooth surfaces in the second full tooth surface fitting state. In the first full tooth surface fitting state, the working pressure on the inclined planes 112 is lower than that on the inclined planes 112 in the second full tooth surface fitting state. When the addendum h1 of one spline 1 is equal to the dedendum h2 of the other spline 1, the two mating tooth surfaces are in the first full tooth surface fitting state. When the addendum h1 of one spline 1 is smaller than the dedendum h2 of the other spline 1, the two mating tooth surfaces are in the second full tooth surface fitting state.

The dimension parameters of h2 and h1 designed above enable the tooth surfaces of the two splines 1 to be in full tooth surface fitting well under the action of the axial pretightening force implemented by pull studs or other tensioning members when the two splines in the present application are applied to connection between the spindle and the tool holder.

Therefore, the improvement of the full tooth surface fitting of the two splines 1 of the present application has the following effects.
①The problem that dust enters a gap between the two mating tooth surfaces, resulting in a reduced mating area of the two tooth surfaces and a deteriorated connection reliability can be solved, and the problem that coolant leaks through the gap between the two mating tooth surfaces when the spindle and the tool holder are connected via the two splines, causing the cooling pressure in the cutter to be difficult to establish can also be solved.
② Precise radial, axial, and circumferential positioning can be achieved, eliminating all six degrees of freedom between the two splines 1, thereby enabling accurate transmission of the rotational torque between the two splines 1, and the splines to withstand a radial force and an overturning moment. Especially when two rotating members are connected by the splines 1 and rotate at a high speed, an axial pretightening force between the two splines 1 will not be lost, and achieving high rigidity connection between the two high-speed rotating members.

As a preferred example of the embodiment, the tooth surfaces of the spline 1 of the embodiment are machined and formed by the side edge of the milling cutter. When the tooth surfaces of the spline 1 are machined by the side edge of the milling cutter, each generatrix on the tooth surfaces can be in full fitting with a generatrix on a rotating surface formed through rotation of the milling cutter, achieving no machining error in theory and good machining quality. There is no need to deliberately leave gaps in some parts of the tooth surfaces to ensure that some other parts of the two mating tooth surfaces all in full fitting. Alternatively, the milling cutter and a grinding wheel are used for machining and forming. Preferably, the annular curved surface formed by the tooth surfaces of the plurality of teeth is formed by a cylindrical surface or a conical surface through enveloping.

The embodiment further provides that the inclined plane 112 on one side of the tooth crest conical surface 111 and the inclined plane 112 on the other side of the tooth crest conical surface 111 are symmetrically arranged relative to a tooth crest radial surface 154, and the tooth root conical surface 113 on one side of the tooth crest conical surface 111 and the tooth root conical surface 113 on the other side of the tooth crest conical surface 111 are symmetrically arranged relative to a tooth root radial surface 155. Two adjacent teeth 11 are symmetrical with respect to a radial central surface of the tooth space 12 formed between the two adjacent teeth 11. The tooth arrangement mode is optimized, enabling the two splines to be reliably connected.

The tooth crest radial surface 154 is a radial central surface of the tooth crest through the spline axis 141, and the tooth root radial surface 155 is a radial central surface of the tooth root through the spline axis 141.

The embodiment further provides that the tooth crest conical surface 111 is symmetrical with respect to the tooth crest radial surface 154, and the tooth root conical surfaces 113 are symmetrical with respect to the tooth root radial surface 155, making the tooth crest conical surface 111 and the tooth root conical surfaces 113 more reasonable in structure design, and further improving the connection reliability between the two splines 1.

A specific distribution mode and structure of a directrix of the tooth crest conical surface 111 and a directrix of each tooth root conical surface 113 are not limited. From the perspective of the distribution mode, the directrix of the tooth crest conical surface 111 and the directrix of the tooth root conical surface 113 may be a plane curve or a space curve. From the perspective of the structure, the directrix of the tooth crest conical surface 111 and the directrix of the tooth root conical surface 113 may be a circle or an ellipse or a polygon or a curve constructed from an arc segment and a straight line segment, or an intersection line of a cone and a curved surface, such as an intersection line of a plane or an outer cylindrical surface of the spline.

In some embodiments, when the directrix of the tooth crest conical surface 111 and the directrix of each tooth root conical surface 113 are both circles, the tooth crest conical surface 111 and the tooth root conical surface 113 are both conical surfaces. The structure is simple, and the teeth 11 can be machined by a milling cutter with a large diameter. The milling cutter has higher rigidity, machining efficiency, and machining precision.

In some other embodiments, when the directrix of the tooth crest conical surface 111 and the directrix of each tooth root conical surface 113 are both ellipses, the tooth crest conical surface 111 and the tooth root conical surface 113 are both elliptical conical surfaces, and a major axis of each elliptical conical surface is perpendicular to the spline axis 141. A tooth depth of the spline 1 is small, which occupies a small axial dimension of the spline 1, and is suitable for occasions that are sensitive to structural dimensions and weights. The tooth depth is an axial distance between a generatrix 114 at the highest position of the tooth crest and a generatrix 115 at the lowest position of the tooth root.

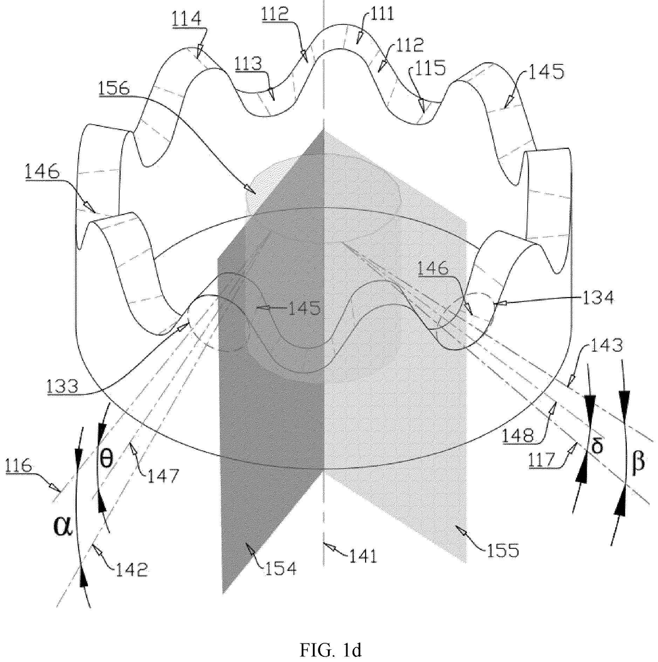

The embodiment further proposes an improvement. As shown in FIG. 1d, a vertex of a tooth crest base conical surface 131 where the tooth crest conical surface 111 is located is an intersection point of the axis of the tooth crest conical surface 111 (referred to as a tooth crest axis 142 for short) and a line 116 where the generatrix at the highest position is located, which is usually located between the spline axis 141 and the tooth crest conical surface 111 and does not cross the spline axis 141. A vertex of a tooth root base conical surface 132 where the tooth root conical surface 113 is located is an intersection point of the axis of the tooth root conical surfaces 113 (referred to as a tooth root axis 143 for short) and a line 117 where the generatrix at the lowest position is located, which is usually located between the spline axis 141 and the tooth root conical surfaces 113 and does not cross the spline axis 141. The tooth crest axis 142 is inclined relative to the spline axis 141, and the generatrix 114 at the highest position of the tooth crest conical surface 111 is perpendicular to the spline axis 141, that is, the line 116 where the generatrix at the highest position is located is perpendicular to the spline axis 141. The tooth root axis 143 is inclined relative to the spline axis 141, and the generatrix 115 at the lowest position of the tooth root conical surface 113 is perpendicular to the spline axis 141, that is, line 117 where the generatrix at the lowest position is located is perpendicular to the spline axis 141. The structures of the tooth crest conical surface 111 and the tooth root conical surface 113 are optimized, enabling the two splines 1 to be reliably connected.

When the addendum h1 of the spline 1 is equal to the dedendum h2 (that is, the tooth surfaces of the two splines 1 can be in full tooth surface fitting unconditionally), the vertex of the tooth crest base conical surface 131 where the tooth crest conical surface 111 is located and the vertex of the tooth root base conical surface 132 where the tooth root conical surface 113 is located are on the same cone top cylindrical surface 156, as shown in FIG. 1d. When the addendum h1 of the spline 1 is smaller than the dedendum h2 (that is, the tooth surfaces of the two splines 1 can be in full tooth surface fitting under the action of the axial pretightening force), the vertex of the tooth crest base conical surface 131 where the tooth crest conical surface 111 is located and the vertex of the tooth root base conical surface 132 where the tooth root conical surface 113 is located are not on the same cone top cylindrical surface. The cone top cylindrical surface is a cylindrical surface coaxially arranged with the spline 1 and having an outer diameter smaller than the inner diameter of the spline 1.

Specifically, the tooth crest axis 142, the line 116 where the generatrix at the highest position of the tooth crest conical surface 111 is located, and the spline axis 141 are all located in the tooth crest radial surface 154, and the tooth root axis 143, the line 117 where the generatrix at the lowest position of the tooth root conical surface 113 is located, and the spline axis 141 are all located in the tooth root radial surface 155. From outside to inside in a radial direction of the spline 1, the tooth crest axis 142 is inclined upward relative to the spline axis 141, and the tooth root axis 143 is inclined downward relative to the spline axis 141.

Further, as shown in FIG. 1d, a tangent line of the tooth crest conical surface 111 and the inclined plane 112 is a tooth crest tangent line 145, and a line where a projection of the tooth crest tangent line 145 on the tooth crest radial surface 154 is located is a line 147 where the projection of the tooth crest tangent line is located. An included angle between the line 147 where the projection of the tooth crest tangent line is located and the tooth crest tangent plane is θ, that is, an included angle between the line 147 where the projection of the tooth crest tangent line is located and the line 116 where the generatrix at the highest position of the tooth crest conical surface 111 is located is θ. A tangent line of the tooth root conical surface 113 and the inclined plane 112 is a tooth root tangent line 146, and a line where a projection of the tooth root tangent line 146 on the tooth root radial surface 155 is located is a line 148 where the projection of the tooth root tangent line is located. An included angle between the line 148 where the projection of the tooth root tangent line is located and the tooth root tangent plane is δ, that is, an included angle between the line 148 where the projection of the tooth root tangent line is located and the line 117 where the generatrix at the lowest position of the tooth root conical surface 113 is located is δ.

Both θ and δ are naturally formed after other parameters are determined, and θ and δ meet: 3° ≤ θ ≤ 25° and 3° ≤ δ ≤25°. In the radial direction of the spline 1, the area of the inclined planes 112 increases, which expands the contact area between the two mating inclined planes 112 when the two splines are connected, and improves the pressure bearing capacity of the inclined planes 112. Preferably, θ is close to 10°, and δ is close to 10°.

In addition, an included angle between the tooth crest axis 142 and the line 116 where the generatrix at the highest position is located is α, an included angle between the tooth root axis 143 and the line 117 where the generatrix at the lowest position is located is β, and an included angle between the inclined plane 112 and the spline axis 141 is γ. The contact area between the tooth crest conical surface 111 and the tooth root conical surface 113 that mate is expanded when the two splines are connected, and the pressure bearing capacity of the tooth crest conical surface 111 and the tooth root conical surface 113 that mate is improved. Preferably, α, β, and γ meet: 5° ≤ α ≤ 30°, 5° ≤ β ≤ 30°, 5° ≤ γ ≤ 45°; and 0° ≤ α - β ≤10⁻⁸°.

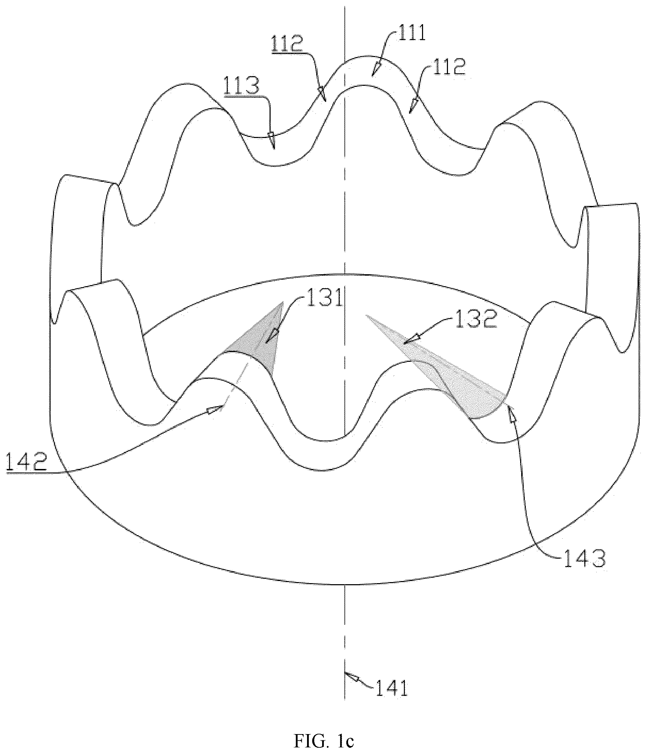

Specifically, as shown in FIG. 1c, the tooth crest base conical surface 131 where the tooth crest conical surface 111 is located is a conical surface with the tooth crest axis 142 as an axis, with the tooth crest directrix 133 as a directrix, crossing through the generatrix 114 at the highest position, and with the vertex on a radial inner side of the spline 1; and the tooth crest conical surface 111 is a part of the tooth crest base conical surface 131.

The tooth root base conical surface 132 where the tooth root conical surface 113 is located is a conical surface with the tooth root axis 143 as an axis, with the tooth root directrix 134 as a directrix, crossing through the generatrix 115 at the lowest position, and with the vertex on the radial inner side of the spline 1; and the tooth root conical surface 113 is a part of the tooth root base conical surface 132.

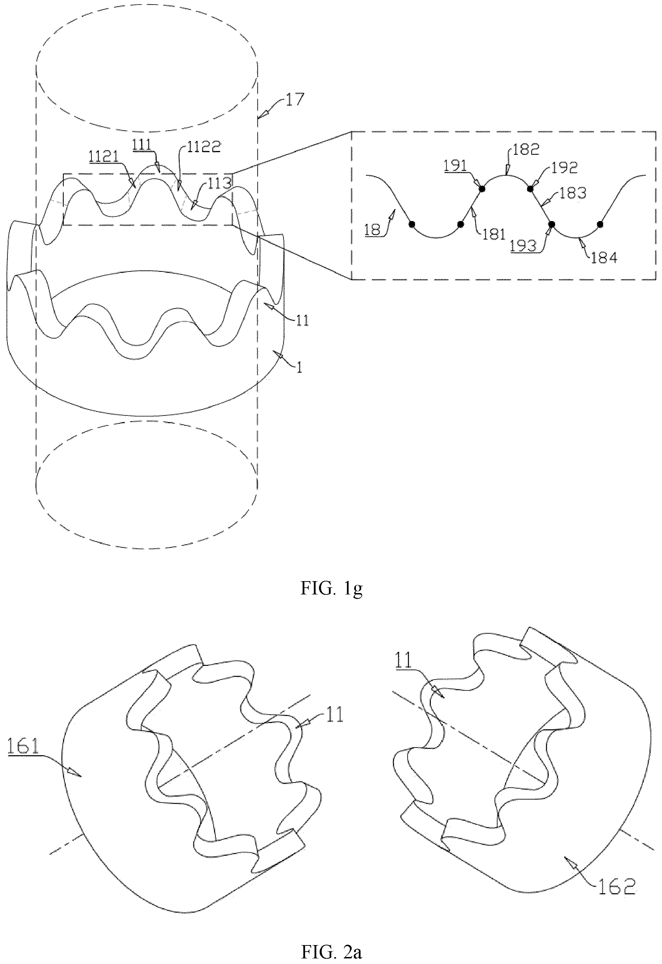

Taking the tooth crest conical surface 111 and the tooth root conical surface 113 that are both elliptical conical surfaces as an example, the specific structure and forming mode of the tooth crest conical surface 111 and the tooth root conical surface 113 are further described. As shown in the left part of FIG. 1g, an inner cylindrical surface 17 is drawn with the inner diameter of the spline 1 as a diameter and the spline axis 141 as an axis. It should be noted that the inner cylindrical surface 17 is a virtual shape, not a solid. Each tooth 11 of the spline 1 intersects with the inner cylindrical surface 17, forming an intersection line showing the profile of the tooth 11 of the spline 1. It is envisaged that when a piece of paper with a thickness of 0 is unfolded into a plane, the intersection line extends to be a plane curve, and the plane curve is an involute 18 of the above intersection line, as shown in the right part of FIG. 1g.

The inclined planes 112 include a first inclined plane 1121 and a second inclined plane 1122. An involute segment corresponding to the first inclined plane 1121 is a first segment 181 on the involute 18, an involute segment corresponding to the tooth crest conical surface 111 is a second segment 182 on the involute 18, an involute segment corresponding to the second inclined plane 1122 is a third segment 183 on the involute 18, and an involute segment corresponding to the tooth root conical surface 113 is a fourth segment 184 on the involute 18. The first segment 181 and the third segment 183 are inclined lines, and the second segment 182 and the fourth segment 184 are both elliptical arcs. The first segment 181 and the second segment 182 are tangent at a first endpoint 191, the second segment 182 and the third segment 183 are tangent at a second endpoint 192, and the third segment 183 and the fourth segment 184 are tangent at a third endpoint 193.

Each tooth 11 of the spline 1 shown in FIG. 1g can be machined by the side edge of the milling cutter. The outer diameter of the milling cutter is 5 mm. When the two splines 1 are connected, the minimum gap between the tooth crest and the matched tooth root is 0.5 µm, and the maximum gap therebetween is 2 µm. In other words, the curvature radius of the involute of the tooth crest conical surface 111 and the curvature radius of the involute of the tooth root conical surfaces 113 are designed to cause the gap between the tooth crest and the matched tooth root to be in the range from 0.0001 time to 0.0004 time the diameter of the milling cutter when the two same splines 1 are connected.

Preferably, the spline 1 in the embodiment includes 9 teeth 11, with an outer diameter of 63.5 mm, an inner diameter of 52 mm, a pressure angle of 20°, an addendum of 4.9995 mm, and a dedendum of 5 mm. The tooth crest conical surface 111, the inclined planes 112, and the tooth root conical surfaces 113 are all developable surfaces. When the tooth 11 of the spline 1 is machined by the side edge of the milling cutter in a line contact manner, the axis of the milling cutter inevitably needs to swing during machining. Therefore,the tooth 11 of the spline 1 can be milled and machined by the side edge of a cylindrical milling cutter or a conical milling cutter on a five-axis machining center. Compared with the hirth coupling, the continuous machining by the side edge of the milling cutter in the line contact manner can improve the efficiency by at least one order of magnitude, and allows shaft extension at a center of the spline 1.

### <Spline assembly>

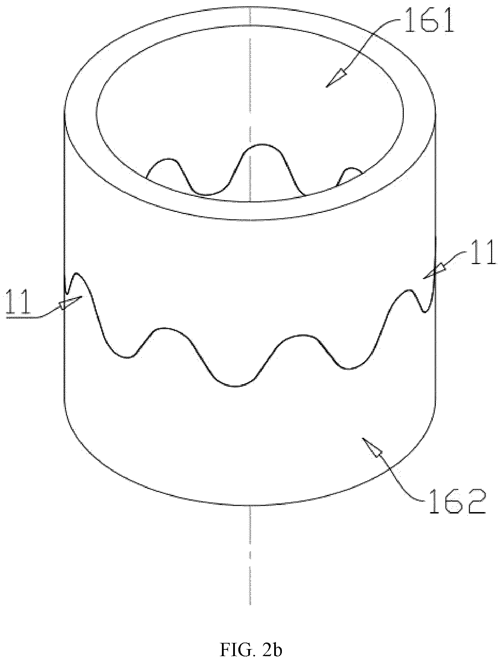

As shown in FIG. 2a and FIG. 2b, the embodiment provides a spline assembly, including a first spline and a second spline. Each of the first spline 161 and the second spline 162 each is the spline according to any one of the above-mentioned implementations. Tooth surfaces of the first spline 161 mate with tooth surfaces of the second spline 162,making the first spline 161 the second spline 162 connected.

When the first spline 161and the second spline 162 are connected, the tooth surfaces of the first spline 161 mate with the tooth surfaces of the second spline 162 in two states. Two mating states include a full tooth surface fitting state and a partial tooth surface fitting state. The full tooth surface fitting state refers to a state where the entire tooth surfaces of the first spline 161 and the entire tooth surfaces of the second spline 162 are fully fitted, and the partial tooth surface fitting state refers to a state where all inclined planes 112 of the first spline 161 and all inclined planes 112 of the second spline 162 are only fitted. Micron- or submicron-order gaps exist between all tooth crest conical surfaces 111 of the first spline 161 and all tooth root conical surfaces 113 of the second spline 162, and micron- or submicron-order gaps exist between all tooth root conical surfaces 113 of the first spline 161 and all tooth crest conical surfaces 111 of the second spline 162.

When α = β, no matter whether the first spline 161 and the second spline 162 are subjected to a pretightening force or not, the tooth surfaces of the first spline 161 and the tooth surfaces of the second spline 162 are in the full tooth surface fitting state.

When α > β, ① if the first spline 161 and the second spline 162 are not subjected to a pretightening force, the tooth surfaces of the first spline 161 and the tooth surfaces of the second spline 162 are in the partial tooth surface fitting state; ② if the first spline 161 and the second spline 162 are subjected to a pretightening force with a preset pressure, the gaps between all the tooth crest conical surfaces 111 of the first spline 161 and all the tooth root conical surfaces 113 of the second spline 162, as well as the gaps between all the tooth root conical surfaces 113 of the first spline 161 and all the tooth crest conical surfaces 111 of the second spline 162 disappear, and the tooth surfaces of the first spline 161 and the tooth surfaces of the second spline 162 are all in the full tooth surface fitting state.

Such a mating mode can ensure that a required preset pressure can be obtained between the tooth surfaces of the first spline 161 and the tooth surfaces of the second spline 162 when the axial pretightening force is minimum, and the preset pressure is evenly distributed on the two mating tooth surfaces as the gap disappears. Two mating tooth surfaces are in close fitting, which can prevent dust from invading the interior of a joint between the two splines 1 through the gap between the two mating tooth surfaces, and can also prevent coolant from leaking through the joint between the two splines when the spindle and the tool holder are connected via the two splines. The spline is suitable for connection between two rotating members rotating at a high speed. The axial pretightening force between the two splines 1 will not lost during high-speed rotation, and the connection strength and reliability are high. In addition, the spline is easy to mount or disassemble and high in cost performance.

### Embodiment 2

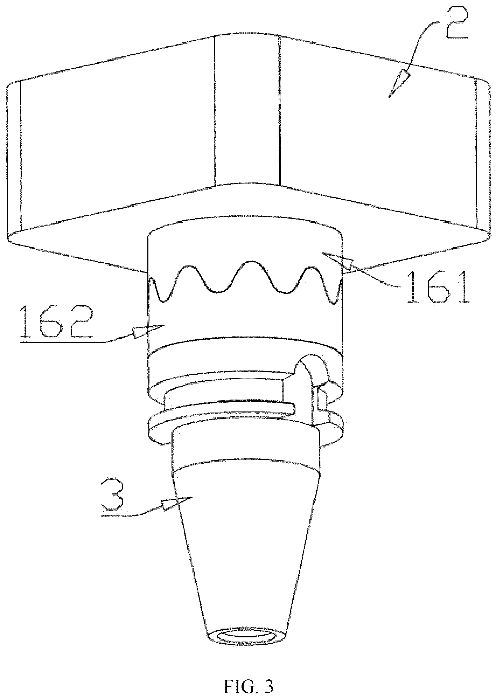

As shown in FIG. 3, the embodiment provides a spindle tool holder mechanism, including a spindle box 2, a spindle, a tool holder 3, and the spline assembly according to any one of the above-mentioned implementations. The spindle is arranged in the spindle box 2. A first spline 161 is formed at one end of the spindle, and a second spline 162 is formed at one end of the tool holder 3. The first spline 161 and the second spline 162 are engaged, making the spindle the tool holder 3 connected.

Currently, in the machine tool industry, commonly used tool holders 3 include a BT tool holder and an HSK tool holder. During high-speed cutting, a shaft hole of the spindle expands under the action of a centrifugal force, and the BT tool holder is pulled deeper into the shaft hole of the spindle by a tool holder tightening mechanism, causing an axial position of a cutter to change, and the machining precision to be reduced. The HSK tool holder prevents the tool holder 3 from being further pulled into the shaft hole of the spindle by additional end face positioning, but the expansion of the shaft hole of the spindle reduces the connection rigidity between the HSK tool holder and the spindle.

Compared with the BT tool holder and the HSK tool holder, the tool holder 3 in the embodiment can provide higher connection rigidity, bearing capacity, positioning accuracy, and high speed adaptability. ①The second spline 162 does not rely on shaft hole positioning of the spindle, all the positioning is achieved on the end face of the spindle, and thus, whether the shaft hole of the spindle expands or not has no impact on the positioning of the tool holder 3.②The tooth depth of the second spline 162 is much smaller than the length of a taper shank of either of the two tool holders, therefore, the stroke length of a tool changing mechanism can be shortened, thereby reducing the tool changing time. This is of certain value for small and complex parts that require frequent tool changing, such as a mobile phone casing. ③ Due to the geometric features of the second spline 162 that can achieve high-efficiency finish machining, the manufacturing cost of the tool holder 3 in the embodiment is lower than that of either the BT tool holder or the HSK tool holder.

For the machining of small and complex parts, a machining center may need to be equipped with dozens of tool holders 3. The adoption of the HSK tool holder causes high cost. By using the tool holder 3 in the embodiment, better performance than that of the HSK tool holder can be achieved at a lower cost than that of the BT tool holder.

### Embodiment 3

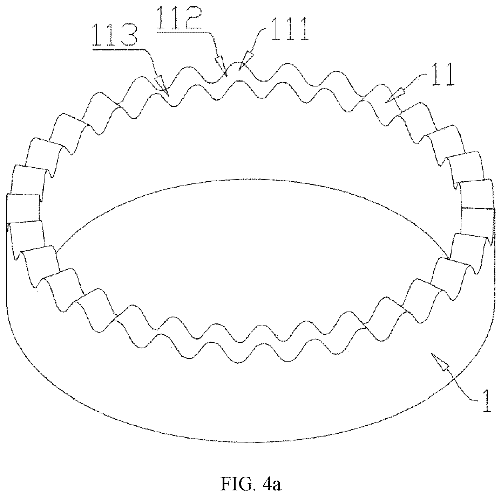

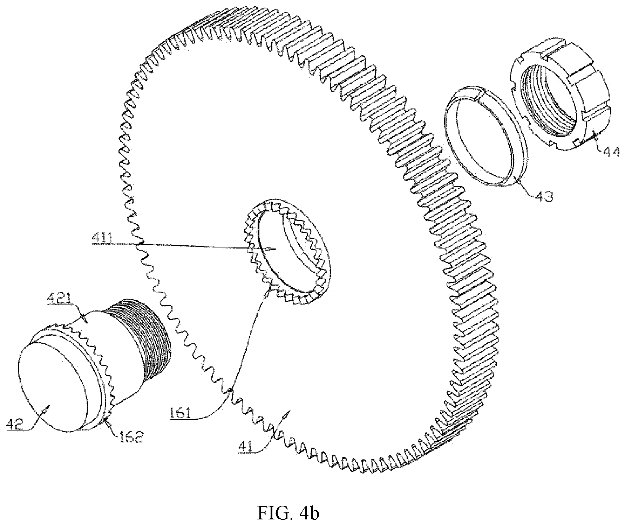

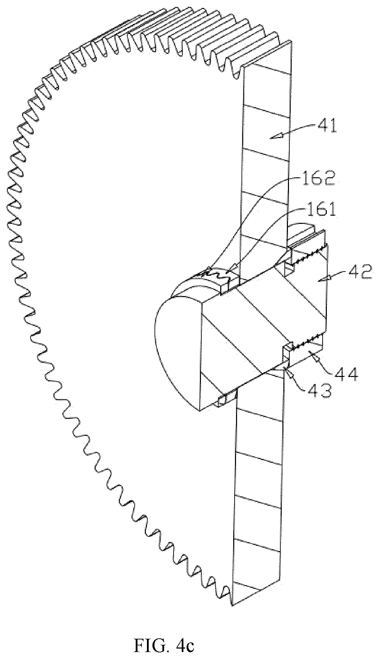

As shown in FIG. 4a to FIG. 4c, the embodiment provides a transmission mechanism, including a disc-shaped member 41, a rotating shaft 42, and the spline assembly according to any one of the above-mentioned implementations. A first spline 161 is formed at one end of the disc-shaped member 41, a shaft shoulder 421 is formed on the rotating shaft 42, and a second spline 162 is formed at one end of the shaft shoulder 421. The second spline 162 and the first spline 161 are engaged, making the rotating shaft 42 the disc-shaped member 41 connected.

Specifically, a shaft hole 411 is formed in the disc-shaped member 41. A conical segment is provided at one end, distal from the first spline 161, of the shaft hole 411, and a conical expansion sleeve 43 is arranged in the conical segment. The rotating shaft 42 sequentially penetrates into the shaft hole 411 and the conical expansion sleeve 43, and a seam that penetrates through the conical expansion sleeve 43 is formed in a side wall of the conical expansion sleeve 43, so that when the conical expansion sleeve 43 is squeezed by the conical segment, the radius of the conical expansion sleeve 43 is reduced and the rotating shaft is tightly held, thereby providing auxiliary radial support and positioning functions for the rotating shaft 42. The shaft shoulder 421 is located at one end of the disc-shaped member 41, and the shaft shoulder 421 and the disc-shaped member 41 are connected via the second spline 162 and the first spline 161. The other end of the rotating shaft 42 is located at the other end of the disc-shaped member 41. The rotating shaft 42 is fixedly connected to the disc-shaped member 41 via a nut 44 and the conical expansion sleeve 43, and the nut 44 provides an axial clamping force for the rotating shaft 42 through the conical expansion sleeve 43. When either the disc-shaped member 41 or the rotating shaft 42 rotates, the other one can be driven to rotate. Specifically, an external thread is formed at the other end of the rotating shaft 42, and an internal thread is formed at the nut 44. The external thread and the internal thread are matched, making the rotating shaft 42 the nut 44 connected.

The spline and the threads on the rotating shaft 42 can be all machined through one-time clamping on a large horizontal turning-milling compound machining center, and are simple to assemble and disassemble. When machining the spline on the rotating shaft 42, a tip of a milling cutter faces an axis of the shaft shoulder 421, thereby enabling the spline 1 to be milled. In addition, the second spline 162 can also be machined by a five-axis turning-milling compound machining center or a horizontal five-axis machining center.

Compared with commonly used flat-key and semicircular-key connections, the spline 1 connection in the embodiment enables high strength, good performance, and high reliability of the rotating shaft 42. Compared with an involute-spline 1 connection, the spline connection requires fewer machining devices and makes the machining process simple and the machining time short.

Specifically, the spline 1 in the embodiment includes 30 teeth 11, with an outer diameter of 225 mm, an inner diameter of 195 mm, a pressure angle of 20°, an addendum of 5.4995 mm, and a dedendum of 5.5 mm. A disk gear is formed at the disc-shaped member 41, with 98 teeth, a modulus of 10, an outer diameter of 1000 mm, and a tooth surface width of 100 mm.

### Embodiment 4

The embodiment provides a transmission mechanism, including a disc-shaped member 41, a rotating shaft 42, and the spline assembly according to any one of the above-mentioned implementations. A disk gear is formed at the disc-shaped member 41, and a shaft gear is formed at the rotating shaft 42. A first spline 161 is formed at one end of the disk gear, and a second spline 162 is formed at one end of the shaft gear. The first spline 161 and the second spline 162 are engaged, enabling a torque of the disk gear to be directly transmitted to the shaft gear without passing through the rotating shaft 42. This reduces the stress on the rotating shaft 42, reduces the volume and the weight of the mechanism, and can also reduce manufacturing and assembly costs. The transmission mechanism is suitable for a multi-stage reducer, and the connection by an intermediate shaft can be replaced with the connection by the first spline 161 and the second spline 162.

### Embodiment 5

The embodiment provides a transmission mechanism for a winch. The transmission mechanism includes a drum, a driving gear, and the spline assembly according to any one of the above-mentioned implementations. A first spline 161 is formed at one end of the drum, and a second spline 162 is formed at one end of the driving gear. The first spline 161 and the second spline 162 are engaged, enabling a torque on the driving gear to be directly transmitted to the drum without passing through a shaft. Therefore, a winch shaft does not need to bear the torque, the volume and the weight of a winch mechanism can be reduced, the service life of the winch mechanism is significantly prolonged, and the reliability of the winch mechanism is greatly enhanced. The transmission mechanism can be used in fields with high requirements for volume, weight, and reliability of the structure, such as offshore heavy-duty equipments.

### Embodiment 6

The embodiment provides a turbine, including a turbine shaft, an impeller, and the spline assembly according to any one of the above-mentioned implementations. A first spline 161 is formed at one end of the turbine shaft, and a second spline 162 is formed at one end of the impeller. The first spline 161 and the second spline 162 are engaged, making the turbine shaft the impeller connected. The turbine can not only improve the machining efficiency greatly and reduce the manufacturing costs, but also achieve higher airtightness, and prevent cracks at the tooth root caused by stress concentration.

### Embodiment 7

The embodiment provides a rotating wheel mechanism, including a plurality of turbines sequentially arranged and the spline assembly according to any one of the above-mentioned implementations. A first spline 161 is formed at one axial end of each of the turbines, and a second spline 162 is formed at the other axial end of the turbine. Two adjacent turbines can be rigidly connected integrally via the first spline 161 and the second spline 162 without an intermediate shaft, and the airtightness of a joint between the two turbines can be improved, or

the rotating wheel mechanism includes a plurality of compressor impellers sequentially arranged and the spline assembly according to any one of the above-mentioned implementations. A first spline 161 is formed at one axial end of each of the compressor impellers, and a second spline 162 is formed at the other axial end of the compressor impeller. Two adjacent compressor impellers can be rigidly connected integrally via the first spline 161 and the second spline 162 without an intermediate shaft, and the airtightness of a joint between the two compressor impellers can be improved, or

the rotating wheel mechanism includes a turbine and a compressor impeller that are adjacently arranged and the spline assembly according to any one of the above-mentioned implementations. A first spline 161 is formed at one axial end of the turbine, and a second spline 162 is formed at one axial end of the compressor impeller. The first spline 161 and the second spline 162 are engaged, enabling the turbine and the compressor impeller to be rigidly connected integrally without an intermediate shaft, and the airtightness of a joint between the turbine and the compressor impeller to be improved.

On a vertical five-axis turn-mill compound machining center or a vertical five-axis machining center, a tip of a milling cutter is distal from an axis of the turbine/compressor impeller, and then the splines on the turbine/compressor impeller can be milled. When the inner diameters of the splines meet that the milling cutter and a spindle head can be accommodated, and the turbine/compressor impeller does not interfere with a machine tool bed during machining, machining programming can be implemented more easily, otherwise, an additional right-angle milling head, a bevel milling head or a parallel axis milling head needs to be attached to a spindle to send the milling cutter to a machining position, and this approach increases the machining programming capability.

The exemplary embodiments of the present disclosure are specifically illustrated and described above. It should be understood that the present disclosure is not limited to the detailed structures, arrangement modes or implementation methods described herein. On the contrary, the present disclosure is intended to cover various modifications and equivalent arrangements included within the spirit and scope of the appended claims.

## Claims

1. A spline, wherein a plurality of teeth (11) evenly distributed in a circumferential direction of the spline (1) are formed at a transmission end of the spline (1);
tooth surfaces of the plurality of teeth (11) are sequentially connected to form an annular curved surface, which is a first-order continuous periodic wavy surface;
the tooth surface of each of the teeth (11) comprises a tooth crest conical surface (111), tooth root conical surfaces (113), and inclined planes (112) tangentially connected between the tooth crest conical surface (111) and the tooth root conical surfaces (113), and the inclined planes (112) are inclined relative to an axis of the spline (1);
the tooth crest conical surface (111), the inclined planes (112), and the tooth root conical surfaces (113) are all working tooth surfaces and are all developable surfaces; and
addendums of the plurality of teeth (11) are the same, and dedendums of the plurality of teeth (11) are the same; and the addendum is h1, the dedendum is h2, and h1 and h2 meet: 0 ≤ h2 - h1 ≤ 2 µm.

2. The spline according to claim 1, wherein the tooth crest conical surface (111) is symmetrical with respect to a tooth crest radial surface (154), and the tooth root conical surfaces (113) are symmetrical with respect to a tooth root radial surface (155),
wherein the tooth crest conical surface (111) defines a tooth crest, and the tooth crest radial surface (154) is a radial central surface of the tooth crest passing through the axis of the spline (1); and each of the tooth root conical surfaces (113) defines a tooth root, and the tooth root radial surface (155) is a radial central surface of the tooth root passing through the axis of the spline (1).

3. The spline according to claim 1, wherein an axis of the tooth crest conical surface (111) is inclined relative to the axis of the spline (1), and a generatrix (114) at the highest position of the tooth crest conical surface (111) is perpendicular to the axis of the spline (1); and/or
an axis of each of the tooth root conical surfaces (113) is inclined relative to the axis of the spline (1), and a generatrix (115) at the lowest position of the tooth root conical surface (113) is perpendicular to the axis of the spline (1).

4. The spline according to claim 1, wherein two adjacent teeth (11) are symmetrical with respect to a radial central surface of a tooth space (12) formed between the two adjacent teeth (11).

5. The spline according to claim 1, wherein the tooth crest conical surface (111) and the tooth root conical surfaces (113) are all conical surfaces, or
the tooth crest conical surface (111) and the tooth root conical surfaces (113) are all elliptical conical surfaces, and a major axis of each of the elliptical conical surfaces is perpendicular to the axis of the spline (1).

6. The spline according to claim 1, wherein the annular curved surface is formed by a cylindrical surface or a conical surface through enveloping.

7. The spline according to claim 1, wherein the annular curved surface is designed to be machined and formed by a side edge of a milling cutter.

8. The spline according to claim 2, wherein an included angle between a projection of a tangent line (145) of the tooth crest conical surface (111) and the inclined plane (112) on the tooth crest radial surface (154) and a tooth crest tangent plane is θ; an included angle between a projection of a tangent line (146) of the tooth root conical surface (113) and the inclined plane (112) on the tooth root radial surface (155) and a tooth root tangent plane is δ; and
θ and δ meet: 3° ≤ θ ≤ 25°, and 3° ≤ δ ≤ 25°,
wherein the tooth crest section is a plane perpendicular to the axis of the spline (1) and tangent to the tooth crest conical surface (111), and the tooth root section is a plane perpendicular to the axis of the spline (1) and tangent to the tooth root conical surface (113).

9. The spline according to claim 2, wherein an included angle between the inclined plane (112) and the axis of the spline (1) is γ, and γ meets: 5° ≤ γ ≤ 45°.

10. The spline according to claim 3, wherein an included angle between the axis of the tooth crest conical surface (111) and the generatrix (114) at the highest position is α, and an included angle between the axis of the tooth root conical surface (113) and the generatrix (115) at the lowest position is β; and
α and β meet: 5° ≤ α ≤ 30°, and 5° ≤ β ≤ 30°.

11. The spline according to claim 10, wherein α and β further meet: 0° ≤ α - β ≤ 10⁻⁸°.

12. A spline assembly, comprising a first spline (161) and a second spline (162), wherein each of the first spline (161) and the second spline (162) is the spline according to any one of claims 1 to 9; and tooth surfaces of the first spline (161) mate with tooth surfaces of the second spline (162) for connection between the first spline (161) and the second spline (162).

13. A spline assembly, comprising a first spline (161) and a second spline (162), wherein each of the first spline (161) and the second spline (162) is the spline according to any one of claims 10 and 11; and tooth surfaces of the first spline (161) mate with tooth surfaces of the second spline (162) for connection between the first spline (161) and the second spline (162);
when the first spline (161) and the second spline (162) are connected, the tooth surfaces of the first spline (161) mate with the tooth surfaces of the second spline (162) in two states; two mating states comprise a full tooth surface fitting state and a partial tooth surface fitting state, the full tooth surface fitting state refers to a state where the entire tooth surfaces of the first spline (161) and the entire tooth surfaces of the second spline (162) are fully fitted, and the partial tooth surface fitting state refers to a state where all inclined planes (112) of the first spline (161) and all inclined planes (112) of the second spline (162) are only fitted; and
when α = β, the tooth surfaces of the first spline (161) and the tooth surfaces of the second spline (162) are in the full tooth surface fitting state, or
when α > β, and the first spline (161) and the second spline (162) are not subjected to a pretightening force, the tooth surfaces of the first spline (161) and the tooth surfaces of the second spline (162) are in the partial tooth surface fitting state, or
when α > β, and the first spline (161) and the second spline (162) are subjected to a pretightening force, the tooth surfaces of the first spline (161) and the tooth surfaces of the second spline (162) are in the full tooth surface fitting state.

14. A spindle tool holder mechanism for a machine tool, comprising a spindle, a tool holder (3), and the spline assembly according to any one of the claim 12 and 13, wherein a first spline (161) is formed at one end of the spindle, and a second spline (162) is formed at one end of the tool holder (3); and the first spline (161) and the second spline (162) are engaged, enabling the spindle and the tool holder (3) to be connected.

15. A rotating wheel mechanism, comprising a plurality of turbines sequentially arranged and the spline assembly according to any one of claims 12 and 13, wherein a first spline (161) is formed at one axial end of each of the turbines, and a second spline (162) is formed at the other axial end of the turbine; and two adjacent turbines can be connected integrally via the first spline (161) and the second spline (162), or
the rotating wheel mechanism comprises a plurality of compressor impellers sequentially arranged and the spline assembly according to any one of claims 12 and 13, wherein a first spline (161) is formed at one axial end of each of the compressor impellers, and a second spline (162) is formed at the other axial end of the compressor impeller; and two adjacent compressor impellers can be connected integrally via the first spline (161) and the second spline (162), or
the rotating wheel mechanism comprises a turbine and a compressor impeller that are adjacently arranged and the spline assembly according to any one of the claims 12 and 13, wherein a first spline (161) is formed at one axial end of the turbine, and a second spline (162) is formed at one axial end of the compressor impeller; and the first spline (161) and the second spline (162) are engaged, enabling the turbine and the compressor impeller to be connected integrally.

16. A transmission mechanism, comprising a disc-shaped member (41), a rotating shaft (42), and the spline assembly according to any one of claims 12 and 13, wherein a first spline (161) is formed at one end of the disc-shaped member (41), a shaft shoulder (421) is formed at the rotating shaft (42), and a second spline (162) is formed at one end of the shaft shoulder (421); and the first spline (161) and the second spline (162) are engaged, enabling the disc-shaped member (41) and the rotating shaft (42) to be in transmission connection.

17. A transmission mechanism for a winch, comprising a drum, a driving gear, and the spline assembly according to any one of claims 12 and 13, wherein a first spline (161) is formed at one end of the drum, and a second spline (162) is formed at one end of the driving gear; and the first spline (161) and the second spline (162) are engaged, enabling the drum and the driving gear to be in transmission connection.
